(19) Europäisches Patentamt
European Patent Office
Office européen des brevets

(11) **EP 1 241 094 B1**

(12) **EUROPÄISCHE PATENTSCHRIFT**

(45) Veröffentlichungstag und Bekanntmachung des Hinweises auf die Patenterteilung:
**09.11.2005 Patentblatt 2005/45**

(51) Int Cl.⁷: **B64F 1/20**, F21V 31/00, F21S 8/00, E01F 9/06

(21) Anmeldenummer: **02005846.7**

(22) Anmeldetag: **14.03.2002**

(54) **Unterflurfeuer für Verkehrsflächen, z.B. auf Flughäfen**

Flush mounted light for traffic areas, e.g. for airports

Feu de balisage encastré pour surfaces de circulation, notamment pour aéroports

(84) Benannte Vertragsstaaten:
**AT BE CH CY DE DK ES FI FR GB GR IE IT LI LU MC NL PT SE TR**

(30) Priorität: **14.03.2001 DE 10112623**

(43) Veröffentlichungstag der Anmeldung:
**18.09.2002 Patentblatt 2002/38**

(73) Patentinhaber: SIEMENS
**AKTIENGESELLSCHAFT
80333 München (DE)**

(72) Erfinder:
• **Laenen, Guy**
**3080 Tewuren (DE)**
• **Vanderen, Michel**
**1150 Woluwe-Saint-Pierre (BE)**

(56) Entgegenhaltungen:
EP-A- 0 940 626    GB-A- 730 227
US-A- 3 188 457    US-A- 5 335 151
US-A- 5 438 495    US-A- 5 676 448

EP 1 241 094 B1

**Beschreibung**

Die Erfindung bezieht sich auf ein Unterflurfeuer für Verkehrsflächen, z.B. auf Flughäfen, nach dem Oberbegriff des Patentanspruchs 1.

Derartige Unterflurfeuer kommen z.B. auf Flughäfen verbreitet zum Einsatz.

Die EP-A-0 940 626 A1 zeigt ein Unterflurfeuer für Verkehrsflächen, welches auch auf Flughäfen zum Einsatz kommen kann. Das Unterflurfeuer hat eine Leuchteinrichtung, eine Optikeinheit und einen Deckel, mittels dem das Unterflurfeuer etwa im Oberflächenniveau der Verkehrsfläche geschlossen ist. Am Deckel ist die Optikeinheit angeordnet. Die mittels der Leuchteinrichtung erzeugte Lichtstrahlung wird mittels der Optikeinheit gerichtet und durch den Deckel in zwischen 90° und 180° zueinander geneigt verlaufenden Abstrahlrichtungen abgestrahlt. Die Optikeinheit hat an ihrer Strahlungseintrittseite eine mehrteilige Sekundär- bzw. Spreaderoptik, mittels der die Abstrahldichte an den beiden Strahlungsaustrittflächen optimiert werden kann. Darüber hinaus ist die Optikeinheit mit ihren zwei Prismen etwa mittig im Deckel des Unterflurfeuers angeordnet, wobei die beiden Prismen symmetrisch in Bezug auf eine horizontale Mittelachse des Unterflurfeuers angeordnet sind, so dass der horizontalen Mittelachse des Unterflurfeuers zugewandte Kanten ihrer der Lichtquelle zugewandten Strahlungseintrittflächen im gleichen Horizontalabstand zur horizontalen Mittelachse des Unterflurfeuers verlaufen. Die Strahlungseintrittflächen der beiden Prismen haben dieselbe horizontale Weite. Den in der EP-A-0 940 626 A1 gezeigten Ausführungsformen von Unterflurfeuern ist gemeinsam, dass jeweils lediglich eine Lichtquelle vorgesehen ist.

Auch die US-A-5 335 151 zeigt ein Unterflurfeuer mit einer Leuchteinrichtung. Dieser Leuchteinrichtung ist ein Prismenkörper zugeordnet, mittels dem zwei Abstrahlflächen des Unterflurfeuers ausgebildet werden, durch die hindurch Licht aus dem Unterflurfeuer in unterschiedliche Richtungen abgestrahlt wird. Beide Abstrahlflächen des Unterflurfeuers werden durch eine gemeinsame einzige Lichtquelle mit Lichtstrahlung versorgt.

Die GB-A-730 227 zeigt ein Unterflurfeuer, bei dem in einem Deckel ein vergleichsweise kompliziert gestalteter Prismenkörper vorgesehen ist, durch den hindurch zwei Abstrahlflächen mit Lichtstrahlung versorgt werden. Die Lichtstrahlung wird durch zwei voneinander getrennte Lichtquellen erzeugt, wobei das Licht der einen bzw. der anderen Lichtquelle der einen bzw. der anderen Abstrahlfläche des Unterflurfeuers zugeordnet und durch den vergleichsweise kompliziert gestalteten Prismenkörper zu der jeweiligen Abstrahlfläche geleitet wird.

Die GB-A-3 188 457 zeigt ein Unterflurfeuer, bei dem innerhalb eines mehr oder weniger massiv gestalteten Unterflurfeuerkörpers in einer Ausnehmung desselben eine Lichtquelle und eine Optikeinheit angeordnet sind. Die Lichtquelle ist seitlich versetzt zur Optikeinheit angeordnet, wobei die von der Lichtquelle stammende Strahlung durch die Optikeinheit schräg aufwärts gerichtet und durch eine Abstrahlfläche des Unterflurfeuerkörpers in der gewünschten Richtung abgestrahlt wird.

Aus der US-A-5 676 448 gehen Unterflurfeuer hervor, bei denen eine Optikeinheit etwa mittig eines Deckels des Unterflurfeuers angeordnet ist und unterhalb der Optikeinheit eine Leuchteinrichtung in Form einer einzigen Lichtquelle vorgesehen ist. Durch diese einzige Lichtquelle werden von der Optikeinheit gebildete Abstrahlflächen des Unterflurfeuers mit Lichtstrahlung versorgt.

Aus der US-A-5 438 495 gehen Unterflurfeuer mit einer oder mit zwei Lichtquellen hervor. Jeweils ist je Abstrahlfläche des Unterflurfeuers bzw. je Prisma eine Lichtquelle vorgesehen. Diese Lichtquelle ist entweder unterhalb der jeweiligen Optikeinheit oder seitlich versetzt zu dieser angeordnet.

Der Erfindung liegt die Aufgabe zugrunde, ausgehend von dem vorstehend geschilderten Stand der Technik ein Unterflurfeuer der eingangs geschilderten Art zu schaffen, welches mit geringem technisch-konstruktivem Aufwand herstellbar ist und sowohl in einer Alternative mit einer Lichtquelle als auch in einer Alternative mit zwei Lichtquellen optimale Abstrahlleistungen erreicht.

Diese Aufgabe wird erfindungsgemäß durch die Merkmale im kennzeichnenden Teil des Patentanspruchs 1 gelöst.

Die Optikeinheit kann vorteilhaft zwei baugleiche Prismen aufweisen, deren Strahleneintrittflächen jeweils eine zwei-, vorzugsweise mehrteilige Sekundärbzw. Spreaderoptik haben.

Je nach Anforderungsprofil kann das Unterflurfeuer mit einer oder mit zwei Lichtquellen ausgerüstet werden, wobei sämtliche mit dem Unterflurfeuer einsetzbare Lichtquellen baugleich ausgestaltet sein können. Durch die baugleiche Ausgestaltung der Prismen reduziert sich darüber hinaus der Aufwand für die Optikeinheit des Unterflurfeuers. Die Optikeinheit und der Deckel sind neben weiteren Bauteilen des Unterflurfeuers baugleich ausgebildet, unabhängig davon, ob das Unterflurfeuer eine oder zwei Lichtquellen aufweist. Durch den Aufbau des vorstehend geschilderten Unterflurfeuers aus modulartig zusammenstellbaren Einzelteilen ergeben sich erhebliche Einsparungen hinsichtlich des technisch-konstruktiven und damit des wirtschaftlichen Aufwands. Die Deckel mit den Aufnahmeöffnungen für die Prismen werden in einem variabel einstellbaren Gusswerkzeug (z.B. einer Kokille) hergestellt. Es können in einem variablen einstellbaren Universalwerkzeug durch unterschiedliche Stempeleinsätze Deckel mit unterschiedlichen Lichtaustrittöffnungen geschaffen werden. Die Deckelgrundform bleibt dabei immer erhalten, nur die Zahl und Richtung der Lichtaustrittöffnungen wird verändert.

Gemäß einer vorteilhaften Ausführungsform des erfindungsgemäßen Unterflurfeuers ist dieses als Low-Protrusion-Unterflurfeuer ausgebildet und weist in Bezug auf das Oberflächenniveau der Verkehrsfläche einen niedrigen Überstand, vorzugsweise einen Überstand von 3 mm bis 10 mm, auf.

Um das Unterflurfeuer auch dann einsetzen zu können, wenn lediglich Licht in einer Richtung abgestrahlt werden soll, ist eine Strahlungsaustrittfläche der Optikeinheit des Unterflurfeuers abdeckbar ausgebildet.

Zur optimalen Ausgestaltung der Abstrahlverhältnisse jedes Prismas ist es zweckmäßig, wenn die Strahlungseintrittfläche jedes Prismas der Projektion einer Spiegelfläche des Prismas in die Strahlungseintrittebene entspricht. Hierdurch ergeben sich optimale Abstrahlungsleistungen in der Strahlungsaustrittfläche des jeweiligen Prismas.

Gemäß einer vorteilhaften Ausführungsform hat das Unterflurfeuer eine Lichtquelle, wobei der Mittelpunkt der Lichtquelle bzw. ihres Reflektors in einer Mittelebene des Unterflurfeuers angeordnet ist.

Des weiteren ist eine vorteilhafte Ausführungsform des Unterflurfeuers realisierbar, wenn dieses zwei Lichtquellen aufweist, wobei die Mittelpunkte der beiden Lichtquellen bzw. ihrer Reflektoren auf einer zur horizontalen Mittelachse des Unterflurfeuers senkrechten horizontalen Linie angeordnet sind und die Reflektoren der beiden Lichtquellen einander berühren oder im Bereich der Mittelebene des Unterflurfeuers einen geringen Abstand zueinander aufweisen.

Hinsichtlich der Abstrahleigenschaften kann mit den vorstehend geschilderten erfindungsgemäßen Unterflurfeuern allen derzeit geltenden, für Flughäfen vorgeschriebenen internationalen Normen genügt werden.

Für Unterflurfeuer, die Licht in einander entgegengesetzten Abstrahlrichtungen abstrahlen, hat es sich als besonders zweckmäßig herausgestellt, wenn die Sekundär- bzw. Spreaderoptik an der Strahlungseintrittfläche des Prismas mehrere, vorzugsweise drei, in Querrichtung des Prismas aufeinanderfolgende Abschnitte aufweist, die in Querrichtung des Prismas konkav und in Längsrichtung des Prismas konvex ausgebildet sind.

Bei Anwendungsfällen, bei denen die Abstrahlung in zueinander geneigte Richtungen erfolgen soll, ist es zweckmäßig, wenn die Sekundär- bzw. Spreaderoptik an der Strahlungseintrittfläche jedes Prismas in Längsrichtung des Prismas ausgehend von einer Spitzenkante desselben aufeinanderfolgenden einen Hauptspreader und einen Nebenspreader aufweist.

Vorteilhaft beträgt die Breite des Hauptspreaders in Längsrichtung des Prismas das 1,0- bis 1,5-fache, vorzugsweise ca. das 1,3-fache, der Breite des Nebenspreaders in Längsrichtung des Prismas.

Hierbei sind zur Schaffung optimaler Abstrahldichten an den Lichtaustrittflächen der Prismen zweckmäßigerweise die Eintrittfläche des Hauptspreaders und die Eintrittfläche des Nebenspreaders in Querrichtung des Prismas so gestaltet, dass sich die Winkel zwischen der Eintrittfläche des Hauptspreaders und einer Horizontalebene des Prismas und zwischen der Eintrittfläche des Nebenspreaders und einer Horizontalebene des Prismas in Längsrichtung und in Querrichtung des Prismas ändern.

Zur Sicherstellung der Lichtabstrahlung in unterschiedlichen Abstrahlrichtungen weisen der Hauptspreader und der Nebenspreader jeweils eine Vielzahl von in Querrichtung des Prismas aufeinanderfolgenden Feldern auf, wobei diese Felder jeweils, insbesondere zur Längsrichtung des Prismas, geneigt angeordnet sind. Je nach Neigung der Felder zur Längsrichtung des Prismas lassen sich dann unterschiedliche Abstrahlrichtungen des Unterflurfeuers realisieren.

Im folgenden wird die Erfindung an Hand von Ausführungsformen unter Bezugnahme auf die Zeichnung näher erläutert.

Es zeigen:

FIG 1      eine Draufsicht auf eine erste Ausführungsform eines erfindungsgemäßen Unterflurfeuers für Verkehrsflächen auf Flughäfen;

FIG 2      eine Schnittdarstellung längs der Linie A - A in FIG 1;

FIG 3      eine Draufsicht auf eine zweite Ausführungsform des erfindungsgemäßen Unterflurfeuers für Verkehrsflächen auf Flughäfen;

FIG 4      eine Schnittdarstellung längs der Linie A - A in FIG 3;

FIG 5      und

FIG 6      Prinzipdarstellungen von Reflektoren und Strahlungseintrittsflächen der in den FIG 1 bis 4 gezeigten erfindungsgemäßen Unterflurfeuer;

FIG 7      eine Queransicht eines Prismas des erfindungsgemäßen Unterflurfeuers;

FIG 8      eine perspektivische Darstellung einer Sekundäroptik des in FIG 7 gezeigten Prismas;

FIG 9      eine Unteransicht des in FIG 7 dargestellten Prismas;

FIG 10      eine Vorderansicht des in den FIG 7 und 9 dargestellten Prismas;

FIG 11      eine Seitenansicht einer weiteren Ausführungsform des Prismas des erfindungsgemäßen Unterflurfeuers;

FIG 12      eine Unteransicht des in FIG 11 gezeigten Prismas;

FIG 13      eine Prinzipdarstellung von Strahlen durch ein erfindungsgemäßes Unterflurfeuer mit Prismen gemäß FIG 11; und

FIG 14      eine Prinzipdarstellung einer weiteren Ausgestaltung von Prismen gemäß den FIG 11 bis 13 in einer Anordnung mit Reflektoren des erfindungsgemäßen Unterflurfeuers.

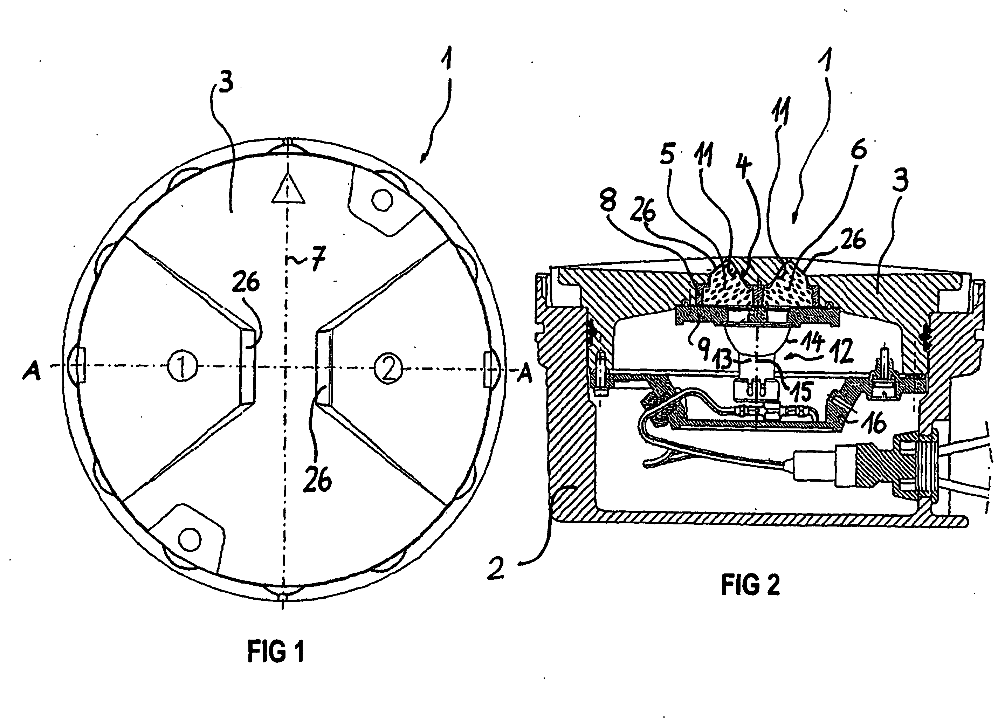

Ein in den FIG 1 und 2 in Draufsicht und im Schnitt dargestelltes erfindungsgemäßes Unterflurfeuer 1, z.B. für Verkehrsflächen auf Flughäfen hat ein Gehäuse 2 und einen Deckel 3, mittels dem das Gehäuse 2 an seiner Oberseite verschließbar ist.

Das Gehäuse 2 ist im Wesentlichen zylindrisch ausgebildet und befindet sich in einer in den FIGUREN nicht dargestellten Ausnehmung in der Verkehrsfläche. Der Deckel 3 verschließt das Gehäuse 2 etwa im Vertikalniveau der Oberfläche der betreffenden Verkehrsfläche. Die Oberkante des Deckels 3 steht bei dem erfindungsgemäßen Unterflurfeuer ca. 3 bis 10 mm, vorzugsweise ca. 6 mm, über das in den FIGUREN nicht dargestellte Oberflächenniveau der Verkehrsfläche nach oben vor.

Der Deckel 3 und das Gehäuse 2 sind dicht miteinander verbunden, so dass das Eindringen von Feuchtigkeit, Fremdstoffen, Staubpartikeln ud.dgl. in den Innenraum des Gehäuses 2 verhindert ist.

Im mittleren Bereich des Deckels 3 ist eine Optikeinheit 4 gehaltert, zu der zwei Prismen 5, 6 gehören. Das Prisma 5 ist in den FIG 1 und 2 auf der linken Seite einer horizontalen Mittelachse 7 des Unterflurfeuers 1 angeordnet, das Prisma 6 entsprechend auf der rechten Seite der horizontalen Mittelachse 7 des Unterflurfeuers 1.

Die beiden Prismen 5, 6 sitzen innerhalb einer Dichtmanschette 8, die den Zwischenraum zwischen den Prismen 5, 6 und dem Deckel 3 ausfüllt, so dass auch zwischen der Optikeinheit 4 und dem Deckel 3 der Durchtritt von Feuchtigkeit, Fremdstoffen, Staubpartikeln ud.dgl. zuverlässig verhindert ist.

Die Optikeinheit 4 einschließlich der Prismen 5, 6 und der Dichtmanschette 8 werden mittels einer Halteplatte 9, die an der Unterfläche des Deckels 3 angebracht ist, am Deckel 3 gehaltert.

Jedes Prisma 5, 6 hat eine Strahlungseintrittfläche 10, durch die hindurch Lichtstrahlung in das Prisma 5, 6 eintreten kann. Durch die Strahlungseintrittfläche 10 in das Prisma 5, 6 eintretende Lichtstrahlung wird von einer der Strahlungseintrittfläche 10 gegenüberliegenden Spiegelfläche 11 des Prismas 5, 6 reflektiert. Die Strahlungseintrittfläche 10 entspricht einer Projektion der Spiegelfläche 11 in die Strahlungseintrittebene des Prismas 5, 6.

Bei der in den FIG 1 und 2 dargestellten Ausführungsform des Unterflurfeuers 1 weist eine Leuchteinrichtung 12 eine Lichtquelle 13 auf, zu der ein Reflektor 14 gehört, dessen Mittelpunkt in einer Mittelebene 15 des Unterflurfeuers 1 angeordnet ist. Die Leuchteinrichtung 12 bzw. die Lichtquelle 13 ist mittels geeigneter Installationen, beispielsweise mittels einer Halteplatte 9, unter dem Gehäusedeckel 3 befestigt.

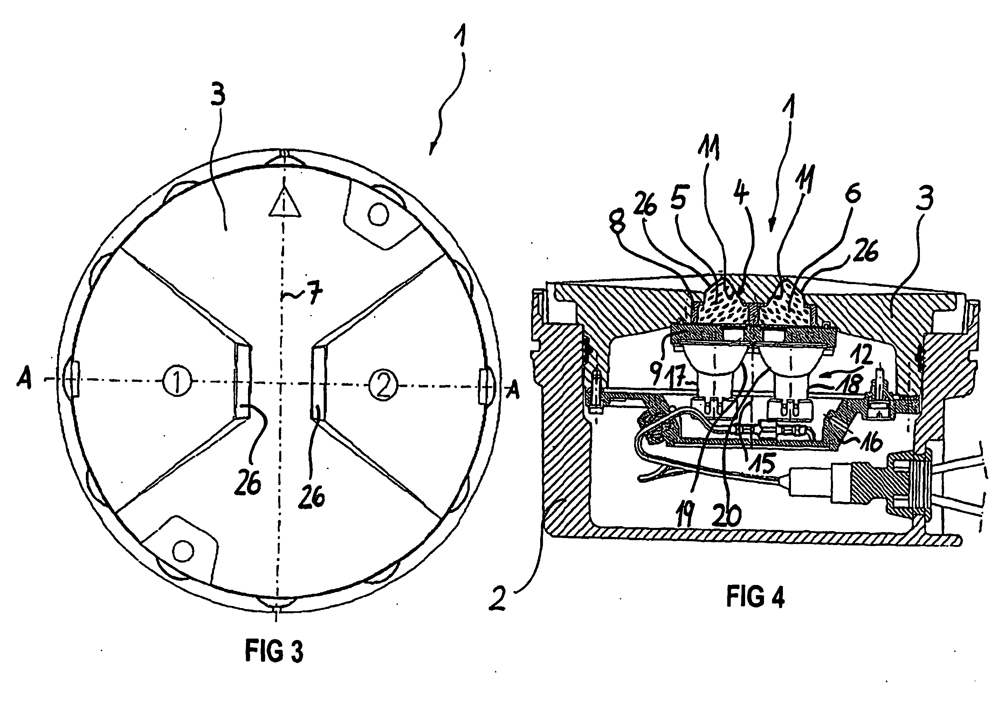

Die in den FIG 3 und 4 näher dargestellte Ausführungsform des erfindungsgemäßen Unterflurfeuers 1 unterscheidet sich von der in den FIG 1 und 2 dargestellten Ausführungsform des Unterflurfeuers 1 lediglich dadurch, dass die Leuchteinrichtung 12 zwei Lichtquellen 17, 18 mit Reflektoren 19, 20 aufweist. Die Lichtquellen 17, 18 sind symmetrisch zur Mittelebene 15 des Unterflurfeuers 1 angeordnet. Des Weiteren sind die Lichtquellen 17, 18 baugleich mit der Lichtquelle 13. Die weiteren Bauteile des Unterflurfeuers 1, insbesondere der Deckel 3 sowie die Optikeinheit 4, sind bei den in den FIG 1 und 2 bzw. 3 und 4 dargestellten Ausführungsformen baugleich.

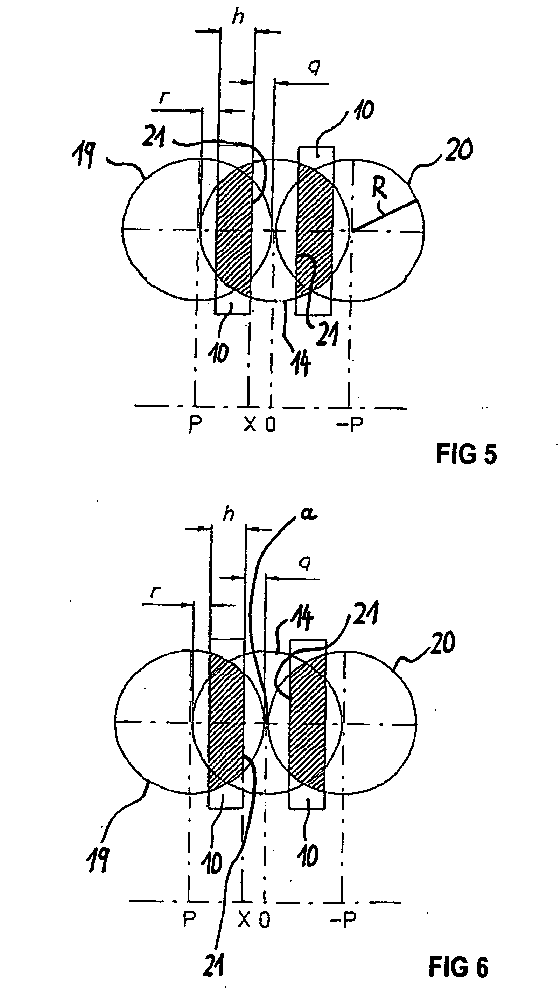

Die räumliche Anordnung zwischen dem Reflektor 14 der Lichtquelle 13 und den beiden Strahlungseintrittflächen 10 der Prismen 5 und 6 des in den FIG 1 und 2 dargestellten Unterflurfeuers 1 geht aus FIG 5 hervor.

Der Reflektor 14 hat einen Radius R. Der Mittelpunkt des Reflektors 14 liegt auf einer Linie "O", die in der Mittelebene 15 des Unterflurfeuers 1 verläuft.

Die der Mittelebene 15 bzw. der horizontalen Mittelachse 7 des Unterflurfeuers 1 zugewandte Kante 21 der Strahlungseintrittfläche 10 sowohl des linken Prismas 5 als auch des rechten Prismas 6 ist im Horizontalabstand X zur horizontalen Mittelachse 7 bzw. zur Linie "O" des Unterflurfeuers 1 parallel zu dieser angeordnet.

Der Radius R des Reflektors 14 entspricht der Summe aus dem Horizontalabstand X zwischen der Linie "O" des Unterflurfeuers, der horizontalen Weite h der Strahlungseintrittfläche 10 des Prismas 5 bzw. 6 und dem Abstand r zwischen der anderen Kante der Strahlungseintrittfläche 10 und der zu dieser Kante parallelen Tangente an den Reflektorumfang.

Der Reflektor 14 und die Strahlungseintrittflächen 10 der Prismen 5, 6 überlagern einander in den in FIG 5 schraffiert dargestellten Flächenbereichen.

Aus Deutlichkeitsgründen sind in FIG 5 auch die Reflektoren 19, 20 eingezeichnet, die jeweils denselben Radius R aufweisen und deren Mittelpunkte in den Linien "P" bzw. "-P" angeordnet sind und zur Linie "O" denselben Abstand aufweisen. In FIG 6 sind diejenigen Flächenabschnitte schraffiert dargestellt, in denen sich die beiden Reflektoren 19, 20 mit den Strahlungseintrittflächen 10 der Prismen 5, 6 überschneiden.

Die schraffierten Flächenabschnitte in den FIG 5 und 6 entsprechen einander betragsmäßig, so dass gleiche Strahlungsverhältnisse bei Unterflurfeuern 1 erreichbar sind, die mit einer Lichtquelle 13 oder mit zwei Lichtquellen 17, 18 ausgerüstet sind.

Der Abstand "P", in dem der Mittelpunkt des in FIG 6 linken Reflektors 19 angeordnet ist, ergibt sich - unter Berücksichtigung der geometrischen Verhältnisse in den FIG 5 und 6 - aus dem Radius R des Reflektors 19, wobei zum Radius R der Horizontalabstand X zwischen der Kante 21 der Strahlungseintrittfläche 10 des Prismas 5 und der horizontalen Mittelachse 7 bzw. der Linie "O" zu addieren und der Abstand q zwischen der Kante 21 der Strahlungseintrittfläche 10 des Prismas 5 und der zu dieser Kante 21 parallelen Tangente an den Umfang des Reflektors 19 zu subtrahieren ist.

Um bei erfindungsgemäßen Unterflurfeuern 1 gleiche Deckel 3 für die Version mit einer Lichtquelle 13 und die Version mit zwei Lichtquellen 17, 18 einsetzen zu können und um dennoch optimale Abstrahlungsverhältnisse zu schaffen, muss die Position der Optikeinheit 4 bzw. die Position der Prismen 5, 6 der Optikeinheit 4 innerhalb des Deckels 3 optimiert werden, so dass dieselbe und optimale Lichtabstrahlleistung erreicht werden kann.

Die Lichtquellen 13 sowie 17, 18 haben gleich bemessene Reflektoren 14 bzw. 19, 20 mit demselben Radius R. Die in den FIG 5 und 6 gezeigte horizontale Weite h der Strahlungseintrittflächen 10 der Prismen 5, 6 ist optimal gewählt; die Strahlungseintrittflächen 10 der beiden Prismen 5, 6 entsprechen somit jeweils der Projektion der Spiegelfläche 11 des Prismas 5 bzw. 6 in die Strahlungseintrittebene des Prismas 5 bzw. 6.

Die Abstrahlungsleistung der in den FIG 1 bis 4 gezeigten Unterflurfeuer 1 ist gleich und optimal, wenn die schraffierten Flächenabschnitte in FIG 5 den schraffierten Flächenabschnitten in FIG 6 entsprechen und ebenfalls optimal sind. Wie bereits erwähnt, entsprechen die schraffierten Flächenabschnitte jeweils den Überschneidungsebenen zwischen dem Reflektor 14 und den Strahlungseintrittflächen 10 bzw. den Reflektoren 19, 20 und den Strahlungseintrittflächen 10.

Es stellt sich somit die Aufgabe, für eine Strahlungseintrittfläche 10 mit der vorgegebenen optimalen horizontalen Weite h den optimalen Horizontalabstand X zur Mittelebene 15 des Unterflurfeuers 1 bzw. zur Linie "O" in den FIG 5 und 6 aufzufinden.

Aus den FIG 5 und 6 lassen sich die folgenden Gleichungen ableiten:

Für die Ausführungsform mit einer Lichtquelle 13, die mittig im Unterflurfeuer 1 angeordnet ist, ergibt sich:

$$R = X + h + r.$$

Für die Ausführungsform des Unterflurfeuers 1 mit zwei Lichtquellen 17, 18 ergibt sich für die in FIG 6 linke Lichtquelle 17 die Gleichung:

$$P = X - q + R.$$

Aus diesen beiden Gleichungen folgt

$$X = P + q - X - h - r$$

und daraus

$$2X = P - h + q - r.$$

Um zu gewährleisten, dass die schraffierten Flächenabschnitte in den FIG 5 denjenigen in FIG 6 entsprechen, wird gefordert, dass

$$q = r.$$

Entsprechend ergibt sich

$$X = (P-h)/2.$$

Als praktische Grenzwerte für P ergeben sich:

$$P_{min} = R,$$

da die Reflektoren 19, 20 der beiden Lichtquellen 17, 18 nicht in- bzw. übereinander angeordnet sein können; und

$$P_{max} = 2R,$$

da für diesen Fall keine Überschneidung zwischen dem Reflektor 14 bei zentraler Lichtquelle 13 und den Reflektoren 19, 20 bei zwei Lichtquellen 17, 18 möglich wäre, was zu zwei unterschiedlich gestalteten Deckeln 3 für die Version mit einer Lichtquelle 13 und die Version mit zwei Lichtquellen 17, 18 führen würde.

Die Projektion der Reflektorform auf die Strahlungseintrittebene des Prismas ist

$$X = \sqrt{(R^2 - X^2)}.$$

Entsprechend ergibt sich jeder schraffierte Flächenabschnitt zu dem Integral

$$x^{/x+h} \sqrt{(R^2 - X^2)} dx.$$

Da

$$\sqrt{(R^2 - x^2)}$$

für alle x positiv ist, ergibt sich, dass der schraffierte Flächenabschnitt dann maximal ist, wenn X minimal ist.

Dasselbe gilt vorteilhaft für alle Reflektoren, deren Form durch eine positive Funktion vorgegeben ist.

Aus der Gleichung

$$X = (P - h)/2$$

ergibt sich, dass X minimal ist, wenn

$$P_{min} = R.$$

Entsprechend ergibt sich, dass die schraffierten Flächenabschnitte in den FIG 5 und 6 zueinander gleich und maximal sind, wenn

$$X=(P_{min}-h)/2 = (R-h)/2.$$

Der einheitliche Deckel 3 für ein Unterflurfeuer 1 mit einer Lichtquelle 13 bzw. mit zwei Lichtquellen 17, 18 gibt für beide Varianten optimale und gleiche Abstrahlleistungen, wenn für eine vorgegebene optimale horizontale Weite h der Strahlungseintrittfläche 10 des Prismas 5, 6 und Reflektoren 14 bzw. 19, 20 mit vorgegebenem Radius R die Strahlungseintrittflächen 10 der Prismen 5, 6 im Abstand (R-h)/2 von der Mittelebene 15 des Unterflurfeuers angeordnet sind und die Mittelpunkte der Lichtquellen 17, 18 bei der Version mit zwei Lichtquellen 17, 18 im Abstand R (und -R) längs der Symmetrieachse des Deckels 3 angeordnet sind.

Um zu vermeiden, dass sich bei der Variante mit zwei Lichtquellen 17, 18 die Reflektoren 19, 20 gegenseitig berühren, was aus mechanischen Gründen unerwünscht sein kann, ist es gegebenenfalls besser, wenn die Lichtquellen bzw. deren Reflektoren 19, 20 im Bereich der Mittelebene 15 des Unterflurfeuers einen kleinen Abstand a zueinander aufweisen, der beispielsweise 1 mm betragen kann. Die Koordinaten der Mittelpunkte der beiden Lichtquellen 17, 18 rücken dann jeweils um a/2 von der Mittelebene 15 des Unterflurfeuers 1 nach außen.

Aufgrund der Lampenfassung haben die Reflektoren 14, 19, 20 einen nicht reflektierenden Mittelabschnitt. Falls X kleiner ist als der Radius dieses Mittelabschnitts, ergibt sich die optimale Platzierung der Strahlungseintrittfläche 10 möglichst nahe zum theoretischen X =(R-h)/2, was bedeutet, dass das bestmögliche X dem Radius der mittigen Reflektorausnehmung entspricht.

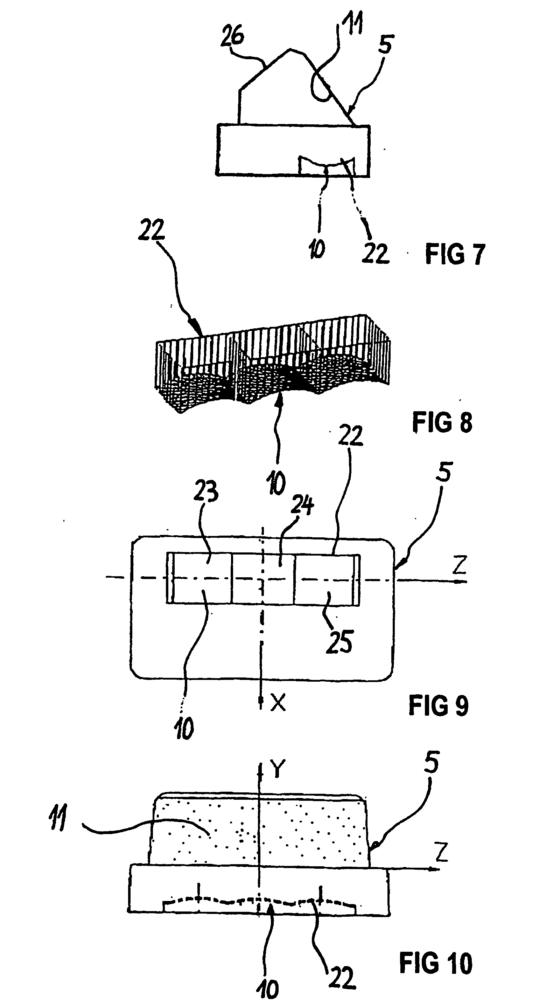

An Hand der FIG 7 bis 10 wird im folgenden ein Prisma 5, 6 näher beschrieben, welches in Unterflurfeuern 1 zum Einsatz kommt, die Licht in einander entgegengesetzte Richtungen abstrahlen sollen.

Das in FIG 7 in Seitenansicht gezeigte Prisma 5 hat eine Sekundär- bzw. Spreaderoptik 22, die in FIG 8 in einer perspektivischen Darstellung gezeigt ist.

Die Sekundär- bzw. Spreaderoptik 22 hat, wie sich insbesondere aus den FIG 8, 9 und 10 ergibt, in Querrichtung Z des Prismas 5 drei nebeneinander angeordnete Abschnitte 23, 24, 25. In Querrichtung Z des Prismas 5 sind diese Abschnitte 23, 24, 25 konkav ausgebildet, in Längsrichtung X des Prismas 5 sind diese Abschnitte 23, 24, 25, wie sich aus FIG 7 ergibt, konvex ausgebildet.

Mittels der vorstehend geschilderten Sekundär- bzw. Spreaderoptik 22 bzw. einer im folgenden noch näher erläuterten weiteren Sekundär- bzw. Spreaderoptik 27 lässt sich erreichen, dass im Bereich der Austrittfläche 26 des Prismas 5 die Abstrahlleistungen erzielt werden, die für Unterflurfeuer 1 gemäß internationalen für Flughäfen geltenden Normen vorgeschrieben sind.

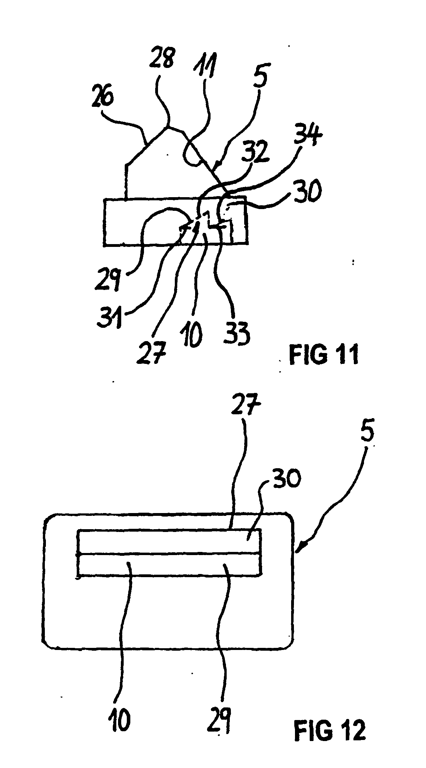

Um die vorstehend geschilderte Bauart von Unterflurfeuern 1 auch dann einsetzen zu können, wenn die Lichtabstrahlung in zueinander geneigte Richtungen erfolgen soll, müssen die Prismen 5, 6 des Unterflurfeuers 1 eine Sekundäroptik 27 aufweisen, die im folgenden an Hand der FIG 11 bis 14 erläutert wird.

Das in FIG 11 gezeigte Prisma 5 hat eine Sekundäroptik 27, die an der Strahleneintrittfläche 10 des Prismas 5 angeordnet ist. Ausgehend von einer Spitzenkante 28 des Prismas 5 hat die Sekundäroptik 27 in Längsrichtung X des Prismas aufeinanderfolgend einen Hauptspreader 29 und einen Nebenspreader 30. Die Zweiteilung der Sekundäroptik 27 in Hauptspreader 29 und Nebenspreader 30 ergibt sich auch aus der in FIG 12 gezeigten Unteransicht des Prismas 5.

Im in FIG 11 dargestellten Ausführungsbeispiel des Prismas 5 ist der oder sind die Hauptspreader ca. 1,3-fach so breit wie der Nebenspreader 30. Das Breitenverhältnis kann in weiten Grenzen verändert werden; 1,3 ist nur eine Optimierung für die speziell gestellte Aufgabe.

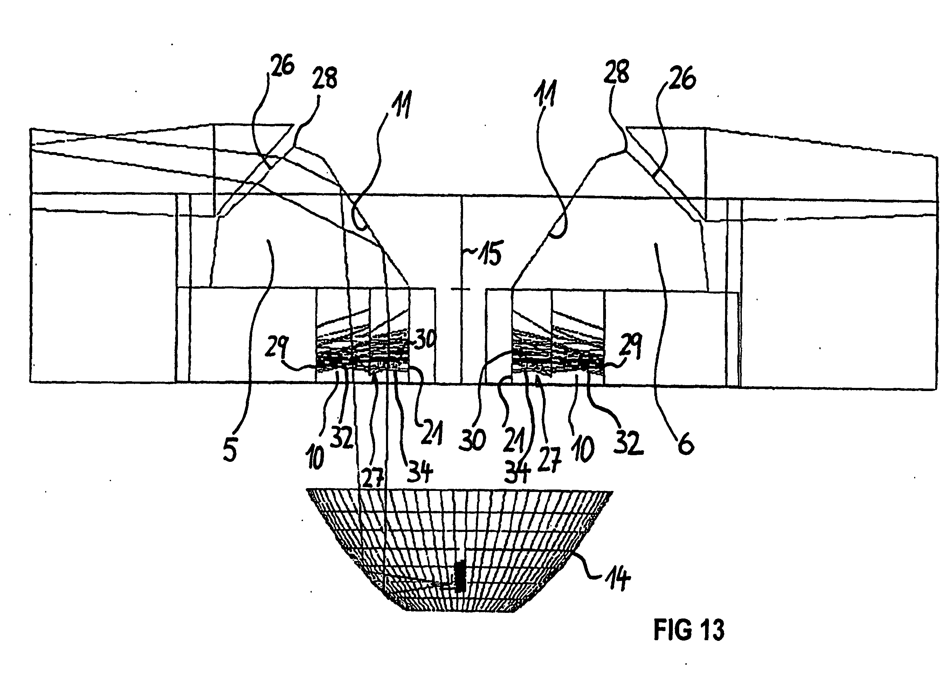

Wie des Weiteren aus der prinzipiellen Darstellung in FIG 13 hervorgeht, ändert sich der Winkel 31 der Eintrittfläche 32 des Hauptspreaders 29 durch Verdrehung und Verschiebung in X, Y und Z-Richtung.

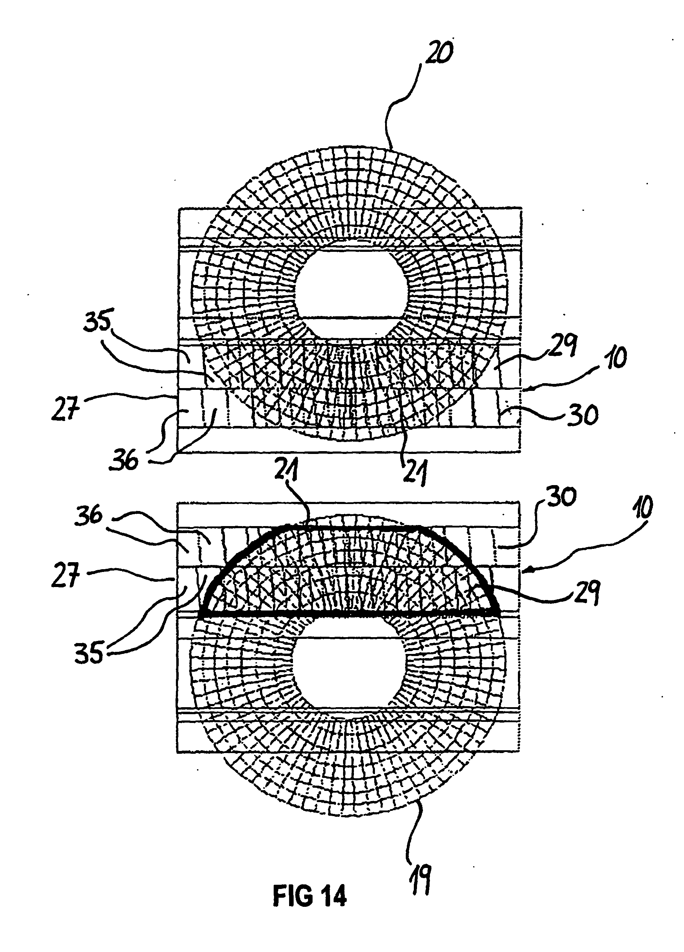

Diese Struktureinheiten bzw. Felder 35 und 36 des Hauptspreaders 29 bzw. des Nebenspreaders 30 können zur Längsrichtung X des Prismas 5 geneigt verlaufen, wie dies in FIG 14 dargestellt ist. Durch entsprechende Auswahl der Neigung ist es möglich, Licht mit der gewünschten Intensität in zueinander geneigte Abstrahlrichtungen abzustrahlen, ohne dass an der Ausgestaltung des Deckels 3 des Unterflurfeuers 1 etwas geändert werden müsste.

Erfindungsgemäß wird ein Unterflurfeuer 1 zur Verfügung gestellt, das aus modulartig zusammenstellbaren und in einem Werkzeug in unterschiedlicher Ausbildung herstellbaren Einzelteilen besteht, wobei die beiden Abstrahlrichtungen des Unterflurfeuers 1 einander entgegengesetzt oder zueinander geneigt angeordnet sein können. Hieraus ergeben sich für Unterflurfeuer 1 erhebliche Einsparungen hinsichtlich des technisch-konstruktiven und damit des wirtschaftlichen Aufwands.

**Patentansprüche**

1. Unterflurfeuer für Verkehrsflächen, z.B. auf Flughäfen, mit einer Leuchteinrichtung (12), einer Optikeinheit (4) und einem Deckel (3), mittels dem das Unterflurfeuer (1) etwa im Oberflächenniveau der Verkehrsfläche geschlossen und an dem die Optikeinheit (4) angeordnet ist, wobei die mittels der Leuchteinrichtung (12) erzeugte Lichtstrahlung mittels der Optikeinheit (4) richt- und durch den Deckel (3) in zwischen 90° und 180° zueinander geneigt verlaufende Abstrahlrichtungen abstrahlbar ist, wobei die Optikeinheit (4) strahleneintrittsseitig eine mehrteilige, z.B. zweiteilige Sekundär- bzw. Spreaderoptik (22; 27) aufweist, mittels der die Abstrahldichte an einer oder mehreren Strahlungsaustrittflächen (26) optimiert ist, wobei die Optikeinheit (4) mit zwei Prismen (5, 6) mittig im Deckel (3) des Unterflurfeuers (1) angeordnet ist, wobei die beiden Prismen (5, 6) symmetrisch in Bezug auf eine horizontale Mittelachse (7) des Unterflurfeuers (1) angeordnet sind, so dass der horizontalen Mittelachse (7) des Unterflurfeuers (1) zugewandte Kanten (21) ihrer der bzw. den Lichtquellen (13; 17, 18) zugewandten Strahlungseintrittflächen (10) im gleichen Horizontalabstand (X) zur horizontalen Mittelachse (7) des Unterflurfeuers (1) verlaufen, und wobei die Strahlungseintrittflächen (10) der beiden Prismen (5, 6) dieselbe horizontale Weite (h) aufweisen, **dadurch gekennzeichnet, dass** das Unterflurfeuer (1) als Baukastensystem modulartig aus für alle Typen baugleichen Deckeln (3) und baugleichen Optikeinheiten (4) für wahlweise eine oder zwei baugleiche Lichtquellen (13; 17, 18) zusammenstellbar ist, dass jede Lichtquelle (13; 17, 18) einen Reflektor (14; 19, 20) mit dem Radius (R) aufweist und dass der Horizontalabstand (X) zwischen den der horizontalen Mittelachse (7) des Unterflurfeuers (1) zugewandten Kanten (21) der Strahlungseintrittflächen (10) der beiden Prismen (5, 6) einerseits und der horizontalen Mittelachse (7) des Unterflurfeuers (1) andererseits der halben Differenz zwischen dem Radius (R) des bzw. der Reflektoren (14; 19, 20) und der horizontalen Weite (h) der Strahlungseintrittflächen (10) der beiden Prismen (5, 6) entspricht.

2. Unterflurfeuer nach Anspruch 1, dessen Optikeinheit (4) zwei baugleiche Prismen (5, 6) aufweist, an deren Strahlungseintrittflächen (10) jeweils eine zwei-, vorzugsweise mehrteilige Sekundär- bzw. Spreaderoptik (22; 27) angeordnet bzw. ausgebildet ist.

3. Unterflurfeuer nach Anspruch 1 oder 2, das als Low-Protrusion-Unterflurfeuer (1) ausgebildet ist und in Bezug auf das Oberflächenniveau der Verkehrsfläche einen niedrigen Überstand, vorzugsweise einen Überstand von 3 mm bis 10 mm, insbesondere von 6 mm, aufweist.

4. Unterflurfeuer nach einem der Ansprüche 1 bis 3, bei dem eine Strahlungsaustrittfläche (26) der Optikeinheit (4) abdeckbar ausgebildet ist.

5. Unterflurfeuer nach einem der Ansprüche 1 bis 4, bei dem die Strahlungseintrittfläche (10) jedes Prismas (5, 6) der Projektion einer Spiegelfläche (11) des Prismas (5, 6) in die Strahlungseintrittebene entspricht.

6. Unterflurfeuer nach einem der Ansprüche 1 bis 5, mit einer Lichtquelle (13), wobei der Mittelpunkt der Lichtquelle (13) bzw. ihres Reflektors (14) in einer Mittelebene (15) des Unterflurfeuers (1) angeordnet ist.

7. Unterflurfeuer nach einem der Ansprüche 1 bis 5, mit zwei Lichtquellen (17, 18), wobei die Mittelpunkte der beiden Lichtquellen (17, 18) bzw. ihrer Reflektoren (19, 20) auf einer zur horizontalen Mittelachse (7) des Unterflurfeuers (1) senkrechten horizontalen Linie angeordnet sind und die Reflektoren (19, 20) der beiden Lichtquellen (17, 18) einander berühren oder im Bereich der Mittelebene (15) des Unterflurfeuers (1) einen geringen Abstand (a) zueinander aufweisen.

8. Unterflurfeuer nach einem der Ansprüche 1 bis 7, bei dem die Sekundär- bzw. Spreaderoptik (22) und an der Strahleneintrittfläche (10) des Prismas (5, 6) mehrere, vorzugsweise drei, in Querrichtung (Z) des Prismas (5, 6) aufeinanderfolgende Abschnitte (23, 24, 25) aufweist, die in Querrichtung (Z) des Prismas (5, 6) konkav und in Längsrichtung (X) des Prismas (5, 6) konvex ausgebildet sind.

9. Unterflurfeuer nach einem der Ansprüche 1 bis 7, bei dem die Sekundär- bzw. Spreaderoptik (27) an der Strahlungseintrittfläche (10) des Prismas (5, 6) in Längsrichtung (X) des Prismas (5, 6) - ausgehend von einer Spitzenkante (28) desselben - aufeinanderfolgend einen Hauptspreader (29) und einen Nebenspreader (30) aufweist.

10. Unterflurfeuer nach Anspruch 9, bei dem die Breite des Hauptspreaders (29) in Längsrichtung (X) des Prismas (5, 6) das 1,0 bis 1,5-fache, vorzugsweise ca. das 1,3-fache, der Breite des Nebenspreaders (30) in Längsrichtung (X) des Prismas (5, 6) beträgt.

11. Unterflurfeuer nach Anspruch 9, bei dem die Eintrittfläche (32) des Hauptspreaders (29) und die Eintrittfläche (34) des Nebenspreaders (30) in Querrichtung (Z) des Prismas (5, 6) so gestaltet sind, dass sich die Winkel (31, 33) zwischen der Eintrittfläche (32) des Hauptspreaders (29) und einer Horizontalebene des Prismas (5, 6) und zwischen der Eintrittfläche (34) des Nebenspreaders (30) und einer Horizontalebene desselben Prismas (5, 6) in Längsrichtung (X) und in Querrichtung (Z) des Prismas (5, 6) ändern.

**12.** Unterflurfeuer nach Anspruch 11, bei dem die Änderung der Winkel (31, 33) durch Verdrehung und Verschiebung in X, Y und Z-Richtung erfolgt.

**13.** Unterflurfeuer nach Anspruch 10, 11 oder 12, bei dem der Hauptspreader (29) und der Nebenspreader (30) jeweils eine Vielzahl von in Querrichtung (Z) des Prismas (5, 6) aufeinanderfolgenden Feldern (35, 36) aufweisen, die jeweils zur Längsrichtung (X) des Prismas (5, 6) geneigt angeordnet sind.

**Claims**

**1.** Flush-marker light for traffic areas, for example at airports, having a lighting device (12), an optics unit (4) and a cover (3) by means of which the flush-marker light (1) is closed approximately at the surface level of the traffic area and on which the optics unit (4) is arranged, the optical radiation produced by means of the lighting device (12) being directed by means of the optics unit (4) and it being possible for it to be emitted through the cover (3) in emission directions running inclined to one another at between 90° and 180°, the optics unit (4) having on the beam entry side a multipartite, for example bipartite secondary or spreader optics (22; 27) by means of which the emission density at one or more radiation exit surfaces (26) is optimized, the optics unit (4) being arranged with two prisms (5, 6) centrally in the cover (3) of the flush-marker light (1), the two prisms (5, 6) being arranged symmetrically with reference to a horizontal central axis (7) of the flush-marker light (1) such that edges (21) of their radiation entry surfaces (10) facing the light source (s) (13; 17, 18), which edges face the horizontal central axis (7) of the flush-marker light (1), run at the same horizontal distance (X) from the horizontal central axis (7) of the flush-marker light (1), and the radiation entry surfaces (10) of the two prisms (5, 6) having the same horizontal width (h), **characterized in that**, as a modular system, the flush-marker light (1) can be assembled modularly from covers (3) of identical design for all types and from optics units (4) of identical design for optionally one or two light sources (13; 17, 18) of identical design, **in that** each light source (13; 17, 18) has a reflector (14; 19, 20) of radius (R), and **in that** the horizontal distance (X) between the edges (21), facing the horizontal central axis (7) of the flush-marker light (1), of the radiation entry surfaces (10) of the two prisms (5, 6), on the one hand, and the horizontal central axis (7) of the flush-marker light (1), on the other hand, corresponds to half the difference between the radius (R) of the reflector(s) (14; 19, 20) and the horizontal width (h) of the radiation entry surfaces (10) of the two prisms (5, 6).

**2.** Flush-marker light according to Claim 1, whose optics unit (4) has two prisms (5, 6) of identical design at whose radiation entry surfaces (10) there is respectively arranged or constructed a bipartite, preferably multipartite, secondary or spreader optics (22; 27).

**3.** Flush-marker light according to Claim 1 or 2, which is designed as a low-protrusion flush-marker light (1) and has a low protrusion with reference to the surface level of the traffic area, preferably a protrusion of 3 mm to 10 mm, in particular of 6 mm.

**4.** Flush-marker light according to one of Claims 1 to 3, in which one radiation exit surface (26) of the optics unit (4) is of coverable design.

**5.** Flush-marker light according to one of Claims 1 to 4, in which the radiation entry surface (10) of each prism (5, 6) corresponds to the projection of a reflecting surface (11) of the prism (5, 6) onto the radiation entry plane.

**6.** Flush-marker light according to one of Claims 1 to 5, having one light source (13), wherein the centre of the light source (13) or of its reflector (14) is arranged in a central plane (15) of the flush-marker light (1).

**7.** Flush-marker light according to one of Claims 1 to 5, having two light sources, (17, 18), wherein the centres of the two light sources (17, 18) or of their reflectors (19, 20) are arranged on a horizontal line perpendicular to the horizontal central axis (7) of the flush-marker light (1), and the reflectors (19, 20) of the two light sources (17, 18) touch one another or have a slight distance (a) between them in the region of the central plane (15) of the flush-marker light (1).

**8.** Flush-marker light according to one of Claims 1 to 7, in which, at the beam entry surface (10) of the prism (5, 6), the secondary or spreader optics (22) has a number of, preferably three, sections (23, 24, 25) which follow one another in the transverse direction (Z) of the prism (5, 6) and are of concave design in the transverse direction (Z) of the prism (5, 6) and of convex design in the longitudinal direction (X) of the prism (5, 6).

**9.** Flush-marker light according to one of Claims 1 to 7, in which, at the radiation entry surface (10) of the prism (5, 6), the secondary or spreader optics (27) has a main spreader (29) and a secondary spreader (30) following one another in the longitudinal direction (X) of the prism (5, 6) - starting from a top edge (28) of the same.

**10.** Flush-marker light according to Claim 9, in which the width of the main spreader (29) in the longitudinal direction (X) of the prism (5, 6) is 1.0 to 1.5 times, preferably approximately 1.3 times, the width of the secondary spreader (30) in the longitudinal direction (X) of the prism (5, 6).

**11.** Flush-marker light according to Claim 9, in which the entry surface (32) of the main spreader (29) and the entry surface (34) of the secondary spreader (30) are fashioned in the transverse direction (Z) of the prism (5, 6) such that the angles (31, 33) between the entry surface (32) of the main spreader (29) and a horizontal plane of the prism (5, 6), and between the entry surface (34) of the secondary spreader (30) and a horizontal plane of the same prism (5, 6) change in the longitudinal direction (X) and in the transverse direction (Z) of the prism (5, 6).

**12.** Flush-marker light according to Claim 11, in which the change in the angles (31, 33) is performed by rotation and displacement in the X, Y and Z directions.

**13.** Flush-marker light according to Claim 10, 11 or 12, in which the main spreader (29) and the secondary spreader (30) in each case have a multiplicity of panels (35, 36) which follow one another in the transverse direction (Z) of the prism (5, 6) and are respectively arranged inclined to the longitudinal direction (X) of the prism (5, 6).

**Revendications**

**1.** Feu de balisage encastré pour des zones de circulation, par exemple sur des aéroports, comprenant un équipement (12) d'éclairage, une unité (4) optique et un couvercle (3), au moyen duquel le feu (1) de balisage encastré est fermé environ au niveau de la surface de la zone de circulation et sur lequel est disposée l'unité (4) optique, sachant que le rayonnement lumineux produit au moyen de l'équipement (12) d'éclairage peut être dirigé au moyen de l'unité (4) optique et émis par le couvercle (3) dans des directions de rayonnement s'étendant en étant mutuellement inclinées entre 90° et 180°, sachant que l'unité (4) optique comporte du côté d'entrée des rayons une optique (22 ; 27) secondaire d'élargissement en plusieurs parties, par exemple en deux parties, au moyen de laquelle la densité de rayonnement sur une ou plusieurs surfaces (26) de sortie de rayonnement est optimisée, sachant que l'unité (4) optique est disposée centralement par deux prismes (5, 6) dans le couvercle (3) du feu (1) de balisage encastré, sachant que les deux prismes (5, 6) sont disposés symétriquement par rapport à un axe (7) médian horizontal du feu (1) de balisage encastré, de sorte que les bords (21), tournés vers l'axe (7) médian horizontal du feu (1) de balisage encastré, de leurs surfaces (10) d'entrée de rayonnement tournées vers la ou les sources (13 ; 17, 18) lumineuses s'étendent à la même distance (X) horizontale de l'axe (7) médian horizontal du feu (1) de balisage encastré, et sachant que les surfaces (10) d'entrée de rayonnement des deux prismes (5, 6) possèdent la même largeur (h) horizontale, **caractérisé en ce que** le feu (1) de balisage encastré peut, en tant que système de construction par blocs, être composé de façon modulaire, pour tous les types, à partir de couvercles (3) de construction identique et d'unités (4) optiques de construction identique, au choix pour une ou deux sources (13 ; 17, 18) lumineuses de construction identique, **en ce que** chaque source (13 ; 17, 18) lumineuse comporte un réflecteur (14 ; 19, 20) de rayon (R), et **en ce que** la distance (X) horizontale, entre d'une part les bords (21) des surfaces (10) d'entrée de rayonnement des deux prismes (5, 6) qui sont tournés vers l'axe (7) médian horizontal du feu (1) de balisage encastré, et d'autre part l'axe (7) médian horizontal du feu (1) de balisage encastré, correspond à la moitié de la différence entre le rayon (R) du ou des réflecteurs (14 ; 19, 20) et la largeur (h) horizontale des surfaces (10) d'entrée de rayonnement des deux prismes (5, 6).

**2.** Feu de balisage encastré suivant la revendication 1, dont l'unité (4) optique comporte deux prismes (5, 6) de construction identique, sur les surfaces (10) d'entrée de rayonnement desquels est respectivement disposée ou encore formée une optique (22 ; 27) secondaire d'élargissement en deux parties, de préférence en plusieurs parties.

**3.** Feu de balisage encastré suivant la revendication 1 ou 2, qui est conçu comme feu (1) de balisage encastré peu saillant et a une faible hauteur de saillie par rapport au niveau de la surface de la zone de circulation, par exemple une hauteur de saillie de 3 mm à 10 mm, en particulier de 6 mm.

**4.** Feu de balisage encastré suivant l'une des revendications 1 à 3, dans lequel une surface (26) de sortie de rayonnement de l'unité (4) optique est constituée de manière à être recouvrable.

**5.** Feu de balisage encastré suivant l'une des revendications 1 à 4, dans lequel la surface (10) d'entrée de rayonnement de chaque prisme (5, 6) correspond à la projection d'une face (11) réfléchissante du prisme (5, 6) dans le plan d'entrée de rayonnement.

**6.** Feu de balisage encastré suivant l'une des revendications 1 à 5, comportant une source (13) lumineuse, sachant que le centre de la source (13) lumineuse ou encore de son réflecteur (14) est disposé dans un plan (15) médian du feu (1) de balisage encastré.

**7.** Feu de balisage encastré suivant l'une des revendications 1 à 5, comportant deux sources (17, 18) lumineuses, sachant que les centres des deux sources (17, 18) lumineuses ou encore de leurs réflecteurs (19, 20) sont disposés sur une ligne horizontale perpendiculaire à l'axe (7) médian horizontal du feu (1) de balisage encastré, et que les réflecteurs (19, 20) des deux sources (17, 18) lumineuses se touchent ou possèdent une faible distance (a) mutuelle dans la région du plan (15) médian du feu (1) de balisage encastré.

**8.** Feu de balisage encastré suivant l'une des revendications 1 à 7, dans lequel l'optique (22) secondaire d'élargissement comporte, sur la surface (10) d'entrée de rayonnement du prisme (5, 6), plusieurs parties (23, 24, 25), de préférence trois, qui se succèdent dans la direction (Z) transversale du prisme (5, 6) et qui sont réalisées concaves dans la direction (Z) transversale du prisme (5, 6) et convexes dans la direction (X) longitudinale du prisme (5, 6).

**9.** Feu de balisage encastré suivant l'une des revendications 1 à 7, dans lequel l'optique (27) secondaire d'élargissement comporte, sur la surface (10) d'entrée de rayonnement du prisme (5, 6), un diffuseur (29) principal et un diffuseur (30) auxiliaire qui se succèdent - en partant d'une arête (28) de sommet du prisme (5, 6) - dans la direction (X) longitudinale du prisme (5, 6).

**10.** Feu de balisage encastré suivant la revendication 9, dans lequel la largeur du diffuseur (29) principal dans la direction (X) longitudinale du prisme (5, 6) est égale à 1,0 à 1,5 fois, de préférence environ 1,3 fois, la largeur du diffuseur (30) auxiliaire dans la direction (X) longitudinale du prisme (5, 6).

**11.** Feu de balisage encastré suivant la revendication 9, dans lequel la surface (32) d'entrée du diffuseur (29) principal et la surface (34) d'entrée du diffuseur (30) auxiliaire sont conçues, dans la direction (Z) transversale du prisme (5, 6), de telle sorte que les angles (31, 33) entre la surface (32) d'entrée du diffuseur (29) principal et un plan horizontal du prisme (5, 6) et entre la surface (34) d'entrée du diffuseur (30) auxiliaire et un plan horizontal du même prisme (5, 6) se modifient dans la direction (X) longitudinale et dans la direction (Z) transversale du prisme (5, 6).

**12.** Feu de balisage encastré suivant la revendication 11, dans lequel la modification des angles (31, 33) s'effectue par rotation et translation dans les directions X, Y et Z.

**13.** Feu de balisage encastré suivant la revendication 10, 11 ou 12, dans lequel le diffuseur (29) principal et le diffuseur (30) auxiliaire comportent chacun une pluralité de champs (35, 36) qui se succèdent dans la direction (Z) transversale du prisme (5, 6) et qui sont respectivement disposés en étant inclinés par rapport à la direction (X) longitudinale du prisme (5, 6).

FIG 1

FIG 2

FIG 4

FIG 3

FIG 5

FIG 6

13

**FIG 7**

**FIG 8**

**FIG 9**

**FIG 10**

FIG 11

FIG 12

FIG 13

EP 1 241 094 B1

**FIG 14**